Europäisches Patentamt

European Patent Office

Office européen des brevets

(11) Numéro de publication: **0 162 784**

**B1**

# (12) FASCICULE DE BREVET EUROPEEN

(45) Date de publication du fascicule du brevet: **26.10.88**

(21) Numéro de dépôt: **85401004.8**

(22) Date de dépôt: **21.05.85**

(51) Int. Cl.⁴: **C 08 K 7/06,** E 04 C 2/22, B 05 B 15/12

(54) Matériau plastique renforcé et dispositif de traitement de surface réalisé à l'aide de ce matériau.

(30) Priorité: **24.05.84 FR 8408151**

(43) Date de publication de la demande:
**27.11.85 Bulletin 85/48**

(45) Mention de la délivrance du brevet:
**26.10.88 Bulletin 88/43**

(84) Etats contractants désignés:
**BE DE FR GB IT NL SE**

(56) Documents cités:
**FR-A-2 064 434**
**FR-A-2 129 905**
**GB-A- 618 094**
**US-A-3 215 583**
**US-A-3 982 955**

**Rolditives for Plastics 1, 79-119 (1978)**

(73) Titulaire: **Azoulay, Félix Max Aimé**
**95 rue de la Pompe**
**F-75116 Paris (FR)**

(72) Inventeur: **Azoulay, Félix Max Aimé**
**95 rue de la Pompe**
**F-75116 Paris (FR)**

(74) Mandataire: **Beauchamps, Georges et al**
**Cabinet Z.Weinstein 20, avenue de Friedland**
**F-75008 Paris (FR)**

Courier Press, Leamington Spa, England.

**Description**

La présente invention a pour objet un matériau plastique renforcé trouvant notamment application dans la construction de dispositifs de traitement de surface, tels que notamment les tunnels de traitements de surface.

Les tunnels de traitement de surface sone essentiellement destinés à la préparation de surfaces chimiques des métaux ferreux et non ferreux devant recevoir une protection et une finition par peinture ou poudre. Ces tunnels équipent toutes les chaînes de peniture pour petites, moyennes et grandes séries, en particulier dans l'industrie automobile ou dans le domaine de l'électro-ménager par exemple.

En outre, dans le contexte économique actuel, ces tunnels remplacent avantageusement les équipements de dégraissage et phosphatation aux solvants chlorés.

Les tunnels de traitement de surface sont conçus pour assurer un traitement continu et fonctionnent par aspersion de produits sur les pièces. Cette conception permet des temps de traitement réduits et une production continue sand interruption depuis le poste de chargement des pièces jusqu'au poste de finition et de déchargement.

Les produits utilisés dans les tunnels de traitements sont constitués essentiellement par de l'eau additionnée de produits chimiques acides ou basiques.

L'industrie utilise des gammes variées de tunnels de traitements de surface allant de 2 étages jusqu'à 10, chaque étage utilisant un produit parfaitement déterminé et correspondant aux critères de traitement demandés. Dans le cas de métaux ferreux on utilise des gammes comprises entre 2 et 5 étages tandis que pour des métaux non ferreux, ces gammes peuvent atteindre 9 à 10 étages.

Dans un tunnel classique pour métaux ferreux la gamme de traitement couramment utilisée est une gamme à trois étages constitué par un dégraissage alcalin chaud, un rinçage froid par eau courante, et un rinçage chaud passivant.

Un tel tunnel est constitué par l'assemblage d'éléments distincts tels que des cuves contenant chaque produit de traitement, un sas constituant l'enveloppe dans laquelle les pièces circulent par exemple au moyen d'un convoyeur aérien, des organes de chauffe, des organes de pulvérisation des produits, une ventilation pour la captation des buées.

Un tel tunnel de traitements, connu en soi, est construit à partir de tôles d'acier moyenne et mince (de deux à cinq mm d'épaisseur) tant en ce qui concerne la cuverie que le sas de traitement. Si dans un tunnel la cuverie peut résister, il s'avère que dans le temps le sas de traitement se dégrade en raison des produits en ruissellement, des condensations dues aux différences de température du sas. De même, toutes les parties présentant des angles vifs et des soudures sont également soumises à la corrosion. Tout ceci implique la nécessité d'un entretien suivi et coûteux du matériel.

En outre, la fabrication d'éléments en chaudronnerie demande une main d'oeuvre spécialisée devenant de plus en plus rare et coûteuse.

On connaît par exemple d'après le document US—A—3 983 955 un matériau plastique renforcé comprenant une couche de résine chargée de microfibres minérales. Mais un tel matériau ne se prête pas à l'obtention d'une structure stratifiée présentant une grande résistance à la fois mécanique et chimique.

Aussi, la présente invention a pour but de remédier à ces inconvénients en proposant un matériau plastique composite se présentant sous la forme d'une structure stratifiée durable et solide destinée notamment à la construction de dispositifs de traitement de surface ou tous matériels similaires.

A cet effet, l'invention a pour objet un matériau plastique renforcé du type comprenant au moins une couche de matériau composite formée d'une résine chargée de microfibres minérales, et possèdant une épaisseur comprise entre 2 et 10 mm, caractérisé en ce que ladite couche présente une densité comprise entre 0,8 et 2 et est constituée par une résine à base de polyesters et par 50 à 70% en volume de microfibres à géométric variable assurant l'obtention d'une structure stratifiée et résultant d'un mélange d'une part de silicates et d'oxyde d'aluminium formant une première composition de densité faible comprise entre 0,1 et 0,3, et d'autre part de silicates et facultativement d'oxyde d'aluminium formant une deuxième composition de densité élevée comprise entre 2 et 3.

On précisera encore ici que les microfibres dans la couche résultent particulièrement d'un mélange de 50 à 70% de la première composition précitée avec 30 à 50% de la deuxième composition précitée, en volume.

Suivant une autre caractéristique, la couche précitée est solidaire d'une deuxième couche formée d'un mélange de fibres de verre et d'une résine biphénolique, et présentant une épaisseur comprise entre 0,5 et 3 mm.

Selon encore une autre caractéristique, la deuxième couche est prise en sandwich entre la couche citée en premier lieu et une autre couche formant couche extérieure possédant une épaisseur de quelques centaines de microns et constituée par un gel coat obtenu à partir d'une résine de polyester et résistant au rayonnement ultraviolet.

La présente invention vise également un dispositif de traitement des surfaces, tel que en particulier un tunnel dans lequel passent des pièces devant recevoir un traitement de surface, caractérisé en ce qu'il est réalisé sous la forme d'éléments modulaires à l'aide d'un matériau répondant aux caractéristiques ci-dessus mentionnées.

La conception modulaire des constructions des sas de traitement de surface est ainsi rendue possible

2

et permet de remplacer avantageuesement les tôles d'acier laminées à froid et inoxydables employées jusqu'ici dont le coût s'avère de plus en plus élevé par rapport aux matières plastiques.

D'autre part, cette conception a pour effet d'améliorer l'isolation thermique grâce à la couche de matériau composite. De même, on obtient une meilleure résistance aux agents atmosphériques tels que l'air et l'humidité ainsi qu'une meilleure résistance aux agents chimiques tels que détergents, lessives, produits dégraissants et phosphatants.

Ce matériau ne nécessite en outre aucun entretien dans le temps, ni peinture de protection tant à l'intérieur qu'à l'extérieur. Enfin, la conception modulaire améloire l'esthétique des matériels.

On décrira maintenant de façon plus détaillée ce matériau, en référence à un exemple de réalisation actuellement préféré de l'invention.

Un tel matériau a été réalisé sous forme stratifiée par application successive, par exemple dans un moule, de plusieurs couches, qui seront décrites ci-après.

La première couche en surface, destinée à être vers l'extérieur est un gel coat obtenu à partir d'une résine polyester courante, tenant aux rayons ultra violet. Cette couche est réalisée sur une épaisseur de quelques centaines de microns.

La deuxième couche constitue un premier renforcement obtenu à partir d'un mélange de fibres de verre et d'une résine biphénolique courante. Cette couche est appliquée sur une épaisseur pouvant varier entre 0,5 et 3 mm.

On applique ensuite notamment par projection mécanique ou par coulée à l'état chaud une couche de matériau composite selon l'invention. Les propriétés de cette couche sont dues à la fludité de la résine d'une part et au pourcentage de charges compris entre 50 et 70% en volume, d'autre part.

Les propriétés géométriques des microfibres utilisées selon l'invention assurent l'obtention d'une structure stratifiée durable et solide et permettent d'éviter tout problème de glissement entre couches susceptible de se produire en utilisant par exemple des charges se présentant sous forme de microsphères qui s'agglomèrent mal et provoquent des glissements entre couches.

Le produit obtenu est une pâte qui est chauffée et appliquée à l'état chaud avec une densité comprise entre 0,8 et 2, suivant une précouche suivie sans interruption d'une deuxième couche. On laisse alors durcir le matériau qui devient un véritable "bouclier" résistant notamment aux hautes températures et aux produits chimiques en particulier basiques. Ce matériau présente de plus l'avantage de ne subir ni déchirement ni absorption en particulier d'eau.

Dans le matériau composite constituant la troisième couche, les charges sont obtenues en mélangeant, dans des proportions prédéterminées, une première composition contenant des silicates et de l'oxyde d'aluminium et présentant une basse densité comprise entre 0,10 et 0,3 et de préférence entre 0,15 et 0,25, une deuxième composition contenant des silicates et facultativement de l'oxyde d'aluminium et présentant une haute densité comprise entre 2 et 3. Avantageusement, les charges sont obtenues en mélangeant environ de 5 à 70%, et de préférence de 55 à 65% de la première composition avec environ 30 à 50% et de préférence 35 à 45% de la deuxième composition, en volume.

Ces deux compositions comprennent également avantageusement des microfibres à géométrie variable à base d'autres oxydes minéraux, tel que l'oxyde de sodium, de calcium, en de faibles proportions variant entre 0 et 5% environ, en volume.

Cette troisième couche de résine est appliqué sur une épaisseur comprise entre 2 et 10 mm, et présente des propriétés surprenantes de résistance aux corrosions chimiques et aux hautes températures.

A titre d'exemple non limitatif, on a représenté au tableau 1 quatre exemples de réalisation du matériau composite constituant la troisième couche. Dans la colonne intitulée pourcentage en charges, on a indiqué le pourcentage, en volume, de charges obtenues en mélangeant les première et seconde compositions A et B avec une résine à basse viscosité peu réactive constituée essentiellement par des polyesters.

Il ressort de ce tableau que le pourcentage de silicates dans la première composition A est avantageusement compris entre 70 et 85% en volume, le pourcentage d'oxyde d'aluminium dans cette composition étant avantageusement compris entre 15 et 25% en volume. Les exemples 2 à 4 montrent que l'on peut également ajouter à cette composition entre 0 et 5% en volume de microfibres d'oxydes minéraux divers.

| | | Silicates % vol | Oxyde d'Aluminium % vol | Oxydes minéraux divers % vol | densité | A/B (vol) | % charges |
|---|---|---|---|---|---|---|---|
| EX 1 | Composition $A_1$ | 80 | 20 | 0 | 0,23 | 50/50 | 50 |
| | Composition $B_1$ | 100 | 0 | 0 | 2,70 | | |
| EX 2 | Composition $A_2$ | 70 | 25 | 5 | 0,13 | 60/40 | 55 |
| | Composition $B_2$ | 99 | 1 | 0 | 2,50 | | |
| EX 3 | Composition $A_3$ | 74 | 22 | 4 | 0,20 | 55/45 | 60 |
| | Composition $B_3$ | 99,3 | 0,2 | 0,5 | 2,61 | | |
| EX 4 | Composition $A_4$ | 83 | 15 | 2 | 0,30 | 65/35 | 70 |
| | Composition $B_4$ | 99 | 0,5 | 0,5 | 2,51 | | |

Le pourcentage de silicate dans la deuxième composition B est avantageusement compris entre 99 et 100% tandis que le pourcentage d'oxyde d'aluminium est avantageusement compris entre 0 et 1% et le pourcentage en oxydes minéraux divers est compris entre 0 et 0,5%. Il est important de noter que seule la densité finale du mélange des deux compositions A et B et de la résine de coulée est importante et doit être nécessairement comprise entre 0,8 et 2.

Après polymérisation de cette résine chargée on applique dans un premier mode de réalisation de l'invention, un nouvexu mat de verre de renforcement ainsi qu'une résine biphénolique pigmentée. Cette couche étant destinée à être mise en contact avec des produits chimiques, on prévoit également une quantité de paraffine suffisante pour empêcher la migration de composés liquides et notamment de l'eau dans cette couche. Avantageusement, la quantité de paraffine mélangée est comprise entre 2 et 20% en poids.

Le produit ainsi obtenu est étuvé pendant quelques heures à une température d'environ 80°C, afin d'obtenir une bonne stabilisation de l'ensemble.

Dans un autre mode de réalisation de l'invention, cette dernière couche peut être réalisée également en un matériau résistant à la corrosion chimique de constitution connue, telle que par exemple une résine vinylester et mat de verre et suivie en final d'un voile chimique, empêchant toute migration. Le coût d'une telle résine limite son utilisation à ue couche relativement fine, d'épaisseur comprise entre 0,2 et 2 mm.

Sous cet aspect, l'invention permet de réaliser un "sandwich" d'une grande résistance à la fois mécanique par sa structure, et chimique par les matériaux employés. Jusqu'à présent, l'obtention simultanée de ces deux propriétés était impossible. Cette conception sandwich constitue une conception nouvelle, unique et indispensable pour obtenir un matériau stratifié permettant la réalisation d'éléments autoportants requis dans l'aplication qui sera détaillée ci-après.

Le matériau plastique armé et composite selon l'invention trouve application notamment dans la construction de dispositif de traitements de surface. Ainsi, une application, non limitative et actuellement préférée de l'invention est celle des tunnels des traitements de surface.

Cette application de l'invention, sera mieux comprise à la lumière de la description explicative qui va suivre, faite en référence aux dessins schématiques annexés donnés uniquement à titre d'exemple non limitatif d'une application actuellement préférée de l'invention et dans lesquels:

— la figure 1 représente une vue en coupe transversale d'un tunnel de traitements de surface comportant le matériau plastique renforcé conforme à l'invention;

— la figure 2 est une vue en élévation montrant partiellement un tunnel de traitements de surface;

— la figure 3 est une vue en coupe transversale montrant un tunnel de traitements de surface par exemple en début de chaîne;

— la figure 4 est une vue en perspective d'un module constituant le sas du tunnel.

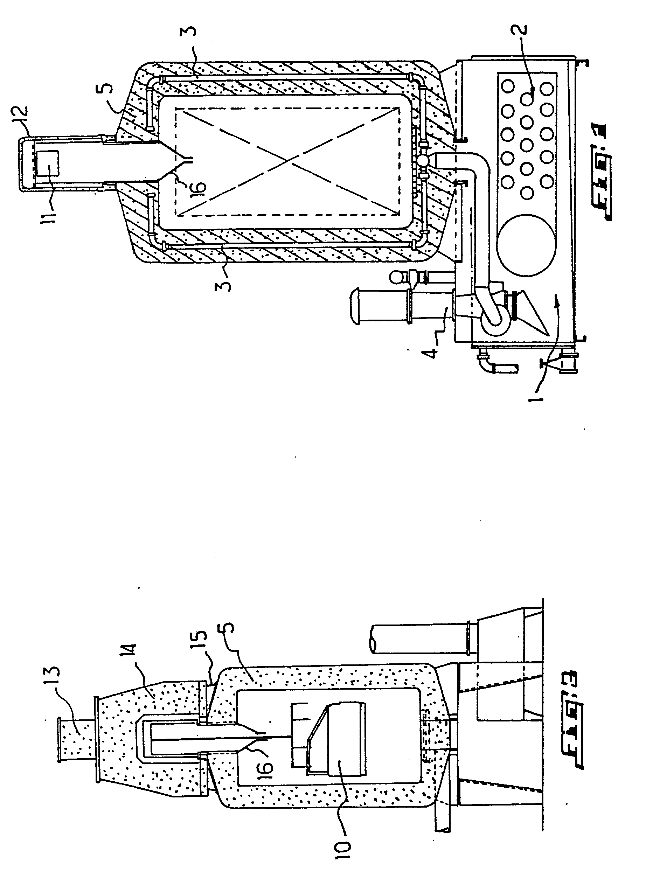

En référence aux figures 1 à 3, un tunnel de traitements de surface de conformation connue comprend des cuves correspondant à chaque produit de traitement dont l'une est généralement représentée à la figure 1 par 1.

La cuve 1 comprend des organes de chauffe 2 et est surmontée par des organes de pulvérisation 3 des produits reliées par l'intermédiaire de tuyauteries à une pompe 4.

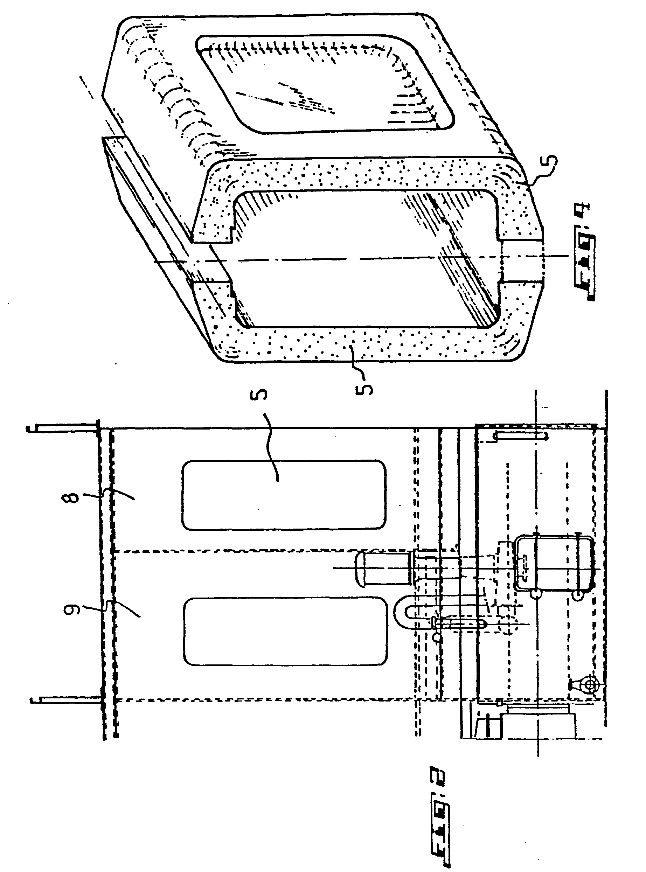

Le tunnel de traitements de surface comprend également un sas 5 constituant une enveloppe dans laquelle des pièces circulent, par exemple au moyen d'un convoyeur aérien. On a représenté sur la figure 3 une pièce 10 suspendue à un convoyeur aérien circulant sur un monorail tel que 11 sur la figure 1.

Le sas 5 constitue une enveloppe qui est rendue étanche au moyen d'un carter 12 surmontant le sas 5 sur toute la longueur du tunnel.

Il est prévu en certains endroits du tunnel, et en particulier en début et en fin de chaîne, des capteurs de buées. Les buées sont dues aux différences de températures existant entre les différentes parties du tunnel dues à l'alternance de cuves chaudes et froides. Ces bués sont aspirées par un monoventilateur 13 et arrivent dans le capteur 14 par l'intermédiaire de buses de captation 15 comme le montre la figure 3.

Afin de séparer l'intérieur du sas ou zone de travail de la zone mécanique comprenant notamment le monorail et le convoyeur, il est prévu des déflecteurs de buées généralement représentés par 16.

En se référant plus particulièrement aux figures 1 et 2, le sas 5 est constitué par l'assemblage en vis-à-vis de demi-modules constituant des caissons auto-portants juxtaposés et assemblés pour former un tunnel dont la longueur est définie en fonction de son utilisation.

La figure 2 montre une partie de sas où l'on peut voir deux caissons 8, 9 juxtaposés. Chaque demi-module, ayant sensiblement la forme d'un demi parallélépipède est réalisé à partir d'un seul et même moule. Le matériau utilisé étant plastique, on peut donner au sas aussi bien intérieurement qu'extérieurement des formes arrondies qui seraient pratiquement iréalisables en grandes séries à partir d'acier. La figure 4 représente un tel module et montre notamment ses formes arrondies à l'intérieur et à l'extérieur.

Ces formes sont particulièrement avantageuses puisqu'elles assurent grâce au matériau utilisé un écoulement des liquides sur les parois du sas, sans accumulation de liquide puisqu'il n'y a pas d'angles vifs. Sur la paroi latérale de chaque demi-module est prévue une nervure qui tend à rigidifier l'ensemble du sas. Cette rigidité ne peut être obtenue aisément pour des tunnels construits à partir de tôle d'acier. En effet, dans ce cas, les parois latérales des éléments constituant le sas ont tendance à se gondoler sous l'effet de leur poids.

**0 162 784**

Dans la partie inférieure du sas, on a prévu une gouttière formée de deux plans inclinées symétriques et qui permet un retour du liquide vers un panier filtrant disposé en sortie au-dessus de cuves.

Comme on peut faire varier facilement les dimensions de cette gouttière, dont les éléments sont conformés à l'aide de moules de forme très simple, il n'y a pas, pour le sas, de contrainte en largeur de même qu'il n'existe pas non plus de contrainte en longueur, ce qui permet de réaliser des sas présentant des garbarits de passage adaptés aux différentes utilisations.

La conception modulaire du sas permet l'interchangeabilité des éléments qui le constituent. Cette interchangeabilité est particulièrement avantageous en cas d'incident.

L'ensemble des avantages qui viennent d'être décrits est essentiellement dû à la conception modulaire du sas, résultant du matériau utilisé, qui permet de répondre aux différentes contraintes des tunnels de triatement de surface et assure la constitution de caissons auto-portants et résistants aux corrosions chimiques.

Dans la conception du tunnel selon l'invention, toutes les parties susceptibles de se dégrader par corrosion sont réalisées à partir du matériau plastique armé et composite selon l'invention. Les parties susceptibles de se dégrader dans le temps sont en particulier le sas 5, les trémies de ruissellement en partie basse, les déflecteurs 16 en partie haute, les caissons de ventilation et organes constituant une enceinte. Tous ces éléments sont réalisés à partir d'éléments modulaires interchangeables et standards.

Le matériau plastique armé et composite est moulé sous une épaisseur comprise entre 3 et 15 mm. Tous les organes constitués à partir de ce matériau ont été représentés sur les figures par des surfaces piquetées.

L'aspect extérieur du tunnel dû à la couche de gel coat est brillant et ne nécessite aucune protection. Le gel est pigmenté et toutes les teintes peuvent être utilisées pour la pigmentation du matériau. L'aspect intérieur du tunnel est également brillant mais brut de matière afin de faciliter le ruissellement et d'empêcher toute adhérence des particules solides. Les parois intérieures du tunnel peuvent être rincées à la lance pour redonner l'éclat au matériau, mais ne nécessitent ni entretien ni peinture de protection.

Tous les organes sont assemblés entre eux par des boulons triatés et des joints d'étanchéité.

L'application du matériau plastique conforme à la présente invention, à la construction d'un tunnel de traitement de surface, ne constitue qu'un exemple non limitatif de l'emploi de ce matériau. Ainsi, on peut envisager également l'application de ce matériau aux installations de traitements de surface par bain, aux cabines de peinture sèche, à rideaux d'eau, aux cabines de peinture "carrossier", ainsi qu'aux cabines de poudrage.

## Revendications

1. Matériau plastique renforcé du type comprenant au moins une couche de matériau composite formée d'une résine chargée de microfibres minérales, et possédant une épaisseur comprise entre 2 et 10 mm, caractérisé en ce que ladite couche présente une densité comprise entre 0,8 et 2 et est constituée par une résine à base de polyesters et par 50 à 70% en volume de microfibres à géométric variable assurant l'obtention d'une structure stratifiée et résultant d'un mélange d'une part de silicates et d'oxyde d'aluminium formant une première composition de densité faible comprise entre 0,1 et 0,3, et d'autre part de silicates et facultativement d'oxyde d'aluminium formant une deuxième composition de densité élevée comprise entre 2 et 3.

2. Matériau selon la revendication 1, caractérisé en ce que les microfibres dans la couche résultent d'un mélange de 50 à 70% de la première composition précitée avec 30 à 50% de la deuxième composition précitée, en volume.

3. Matériau selon la revendication 1 ou 2, caractérisé en ce que la couche précitée est solidaire d'une deuxième couche formée d'un mélange de fibres de verre et d'une résine biphénolique et présentant une épaisseur comprise entre 0,5 et 3 mm.

4. Matériau selon l'une des revendications 1 à 3, caractérisé en ce que la deuxième couche est prise en sandwich entre la couche citée en premier lieu et une autre couche formant couche extérieur possédant une épaisseur de quelques centaines de microns et constituée par un gel coat obtenu à partir d'une résine de polyester et résistant au rayonnement ultraviolet.

5. Dispositif de traitement des surfaces et constituant notamment un tunnel dans lequel passent des pièces devant recevoir un traitement de surface, caractérisé en ce qu'il est réalisé sous la forme d'éléments modulaires à l'aide du matériau selon l'une des revendications 1 à 4.

## Patentansprüche

1. Verstärkter Kunststoff der Gattung, die wenigstens eine außer einem mit mineralischen Fasern verstärkten Harz gebildete und eine zwischen 2 und 10 mm liegende Dicke aufweisende Verbundwerkstoffschicht aufweist, dadurch gekennzeichnet, daß die besagte Schicht eine zwischen 0,8 und 2 liegende Dichte aufweist und aus einem Polyesterharz und aus 50 bis 70 Volumen % Mikrofasern mit veränderlicher Geometrie besteht, wobei die Mikrofasern eine geschichtete Struktur ermöglichen und von einer Mischung einerseits aus Silikaten und Aluminiumoxid zur Bilden einer ersten Zusammensetzung mit einer zwischen 0,1 und 0,3 liegenden niedrigen Dichte und andererseits aus Silikaten und gegebenenfalls Aluminiumoxid

6

zur Bildung einer zweiten Zusammensetzung mit einer zwischen 2 und 3 liegenden hohen Dichte gebildet werden.

2. Stoff nach Anspruch 1, dadurch gekennzeichnet, daß die Mikrofasern in der Schicht von einer Mischung aus 50 bis 70 Volumen % der ersten besagten Zusammensetzung mit 30 bis 50 Volumen % der zweiten besagten Zusammensetzung gebildet werden.

3. Stoff nach Anspruch 1 oder 2, dadurch gekennzeichnet, daß die besagte Schicht mit einer zweiten, aus einer Mischung aus Glasfasern und aus einem Biphenolharz gebildeten Schicht einstückig ist, wobei die Dicke der zweiten Schicht zwischen 0,5 und 3 mm liegt.

4. Stoff nach einem der Ansprüche 1 bis 3, dadurch gekennzeichnet, daß die zweite Schicht zwischen der erstgenannten Schicht und einer anderen eine äußere Schicht bildenden Schicht liegt, die eine Dicke von einigen Hunderten Mikron aufweist und die aus einem aus einem Polyesterharz gebildeten und der Ultraviolettstrahlung widerstehenden Gelcoat gebildet ist.

5. Oberflächenbehandlungsvorrichtung, die insbesondere einen Tunnel bildet, durch den die oberflächlich zu behandelnden Stücke gehen, dadurch gekennzeichnet, daß sie als modulare Elemente mit Hilfe des Kunststoffs nach einem der Ansprüche 1 bis 4 gebildet ist.

## Claims

1. Reinforced plastic material of the type comprising at least one composite material layer formed of a mineral microfibre reinforced resin, and having a thickness comprised between 2 and 10 mm, characterized in that the said layer has a density comprised between 0.8 and 2 and is formed of a resin with a polyester basis and of 50 to 70 volume % microfibres with a variable geometry which permit obtaining a laminated structure and which result from a mixture of silicates and of aluminium oxide forming a first composition with a low density comprised between 0.1 and 0.3, on the one hand, and of silicates and possibly of aluminium oxide forming a second composition with a high density comprised between 2 and 3, on the other hand.

2. Material according to claim 1, characterized in that the microfibres in the layer result from a mixture of 50 to 70 volume % of the first aforesaid composition with 30 to 50 volume % of the second aforesaid composition.

3. Material according to claim 1 or 2, characterized in that the aforesaid layer is solid with a second layer formed of a mixture of glass fibres and of a biphenolic resin and having a thickness comprised between 0.5 and 3 mm.

4. Material according to one of claims 1 to 3, characterized in that the second layer is sandwiched between the first cited layer and another layer forming an outer layer having a thickness of a few hundred microns and formed of a gel coat obtained from a polyester resin and withstanding ultraviolet radiation.

5. Surface treatment installation forming in particular a tunnel through which pieces intended to be submitted to a surface treatment pass, characterized in that it is performed as modular elements with the aid of the material according to one of claims 1 to 4.

FIG.1

FIG.3

Fig. 4

Fig. 2